# EUROPÄISCHE PATENTSCHRIFT

(11) **EP 1 862 694 B1**
(45) Veröffentlichungstag und Bekanntmachung des Hinweises auf die Patenterteilung: **15.07.2009**
(21) Anmeldenummer: 07006635.2
(22) Anmeldetag: 30.03.2007
(51) Int. Cl.: F16F 7/09

(54) **Dämpfer**
Damper
Amortisseur

(30) Priorität: 31.05.2006 DE 102006025749
(43) Veröffentlichungstag der Anmeldung: 05.12.2007
(73) Patentinhaber: SUSPA Holding GmbH, 90518 Altdorf (DE)
(72) Erfinder: Peuker, Thomas, 92260 Ammerthal (DE); Mayer, Dieter, 92237 Sulzbach-Rosenberg (DE); Weder, Michael, 90455 Nürnberg (DE)
(74) Vertreter: Rau, Albrecht

(56) Entgegenhaltungen:
- EP-A- 0 965 675
- EP-B1- 0 697 539
- WO-A-20/05007964
- DE-U1- 29 720 092

## Beschreibung

Die Erfindung betrifft einen Dämpfer, insbesondere einen Reibungsdämpfer, wie er beispielsweise in Waschmaschinen mit Schleudergang eingesetzt wird.

Aus der EP 0 697 539 B1 und der WO 2005/007964 A1 ist ein Reibungsdämpfer mit einem rechteckigen Gehäuse bekannt. Der Stößel weist auf gegenüberliegenden Seiten Reibbeläge auf. Darüber hinaus ist die Fertigung des Gehäuses äußerst aufwändig.

Der Erfindung liegt die Aufgabe zugrunde, einen Reibungsdämpfer zu schaffen, der einfach und kostengünstig herstellbar ist.

Die Aufgabe wird durch die Merkmale des Anspruchs 1 gelöst. Der Kern der Erfindung besteht darin, am innenseitigen Ende eines in einem Gehäuse geführten Stößels ein durchgehendes Fenster vorzusehen, in dem ein Reibbelag angeordnet wird. Dieser eine Reibbelag liegt reibend an gegenüberliegenden Gehäuse-Innenwänden an. Durch die Gestaltung des Fensters - der Reibbelags-Ausnehmung - und des Reibbelags kann die Dämpfungscharakteristik des Dämpfers frei eingestellt werden. Die Anordnung hat darüber hinaus den Vorteil, dass zum Reiben an zwei Reibflächen nur ein einziger Reibbelag erforderlich ist.

Weitere vorteilhafte Ausgestaltungen der Erfindung ergeben sich aus den Unteransprüchen.

Zusätzliche Merkmale und Einzelheiten der Erfindung ergeben sich aus der Beschreibung mehrerer Ausführungsbeispiele anhand der Zeichnung.

Es zeigen
- Fig. 1: eine Außenansicht eines Dämpfers gemäß einem ersten Ausführungsbeispiel,
- Fig. 2: einen Querschnitt gemäß der Schnittlinie II-II in Fig. 1,
- Fig. 3: das Gehäuse des Dämpfers gemäß Fig. 1,
- Fig. 4: den Stößel des Dämpfers gemäß Fig. 1,
- Fig. 5: den Reibbelag des Dämpfers gemäß Fig. 1,
- Fig. 6: einen Reibbelag eines Dämpfers gemäß einem zweiten Ausfiihrungsbeispiel,
- Fig. 7: einen Stößels eines Dämpfers gemäß einem dritten Ausfiihrungsbeispiel,
- Fig. 8: einen Stößel eines Dämpfers gemäß einem vierten Ausführungsbeispiel,
- Fig. 9: ein Gehäuse eines Dämpfers gemäß einem fünften Ausfiihrungsbeispiel,
- Fig. 10: ein Gehäuse-Teil des Gehäuses gemäß Fig. 9,
- Fig. 11: ein Gehäuse eines Dämpfers gemäß einem sechsten Ausfiihrungsbeispiel,
- Fig. 12: ein Gehäuse-Teil des Gehäuses gemäß Fig. 11,
- Fig. 13: einen Stößel eines Dämpfers gemäß einem siebten Ausführungsbeispiel, und
- Fig. 14: einen Querschnitt im Bereich der Reibbelags-Ausnehmung eines Dämpfers gemäß einem achten Ausführungsbeispiel .

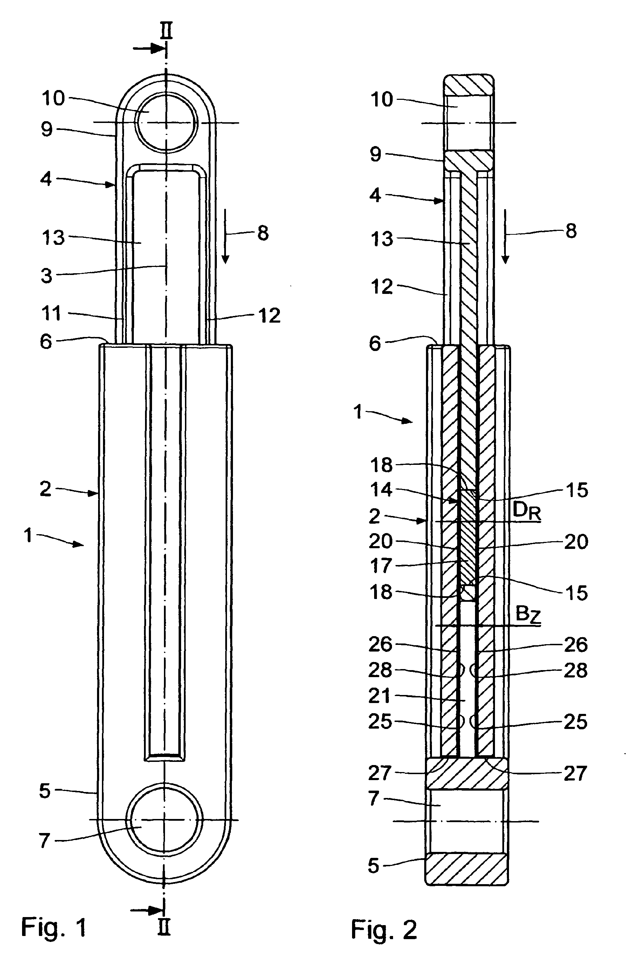

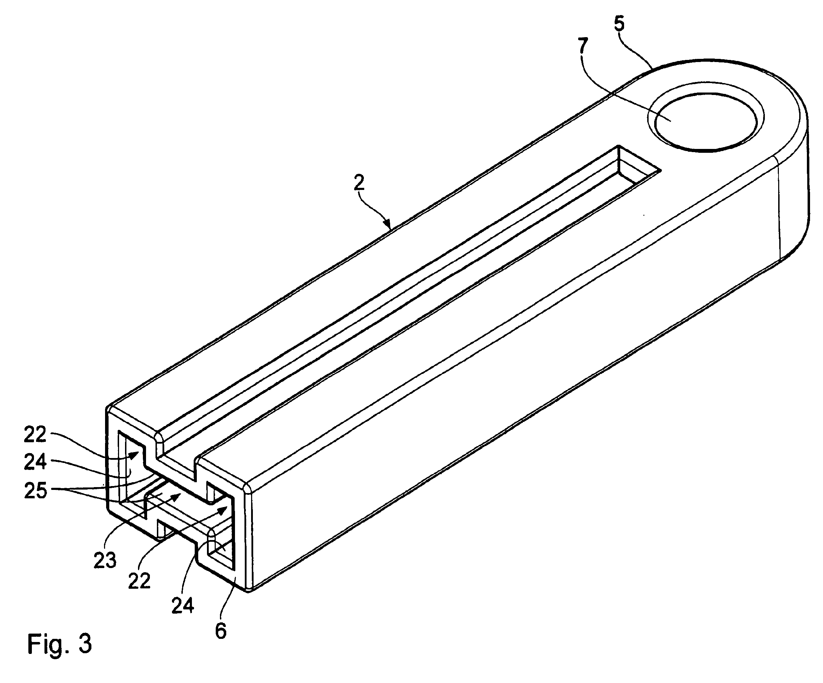

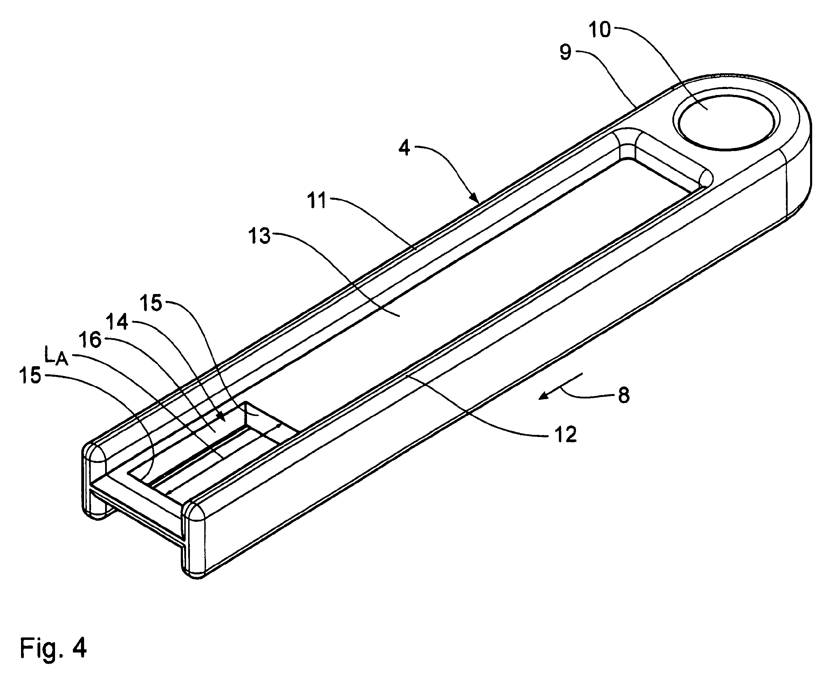

Im Folgenden wird unter Bezugnahme auf die Fig. 1 bis 5 ein erstes Ausfiihrungsbeispiel der Erfindung beschrieben. Ein Dämpfer 1 weist ein Gehäuse 2 mit einer Mittel-Längs-Achse 3 auf, in dem ein Stößel 4 verschiebbar geführt ist. Das Gehäuse 2 ist einteilig ausgebildet. Es ist auch möglich, das Gehäuse 2 aus mehreren Teilen, insbesondere zwei Teilen, zusammengesetzt vorzusehen. Das Gehäuse 2 weist ein äußeres, axiales Ende 5 sowie ein dem Stößel 4 zugewandtes, gegenüberliegendes Ende 6 auf. Im Bereich des Endes 5 weist das Gehäuse 2 ein Befestigungs-Element 7, insbesondere in Form eines Auges, über das das Gehäuse 2 in der Waschmaschine befestigt und angelenkt wird. Der Stößel 4 ist entlang einer Einschub-Richtung 8, die parallel zur Mittel-Längs-Achse 3 verläuft, in das Gehäuse 2 einschiebbar. Am entgegen der Richtung 8 liegenden äußeren Ende 9 des Stößels 4 weist dieser ein Befestigungs-Element 10 in Form eines Auges auf, über das der Stößel 4 in einer Waschmaschine angelenkt und befestigt wird. Der Stößel 4 kann durch nicht dargestellte Auszugs-BegrenzungsMittel daran gehindert sein, dass man diesen vollständig aus dem Gehäuse 2 ziehen kann.

Der Stößel 4 weist beginnend hinter dem Befestigungs-Element 10 in Richtung 8 einen doppel-T-förmigen bzw. H-förmigen Querschnitt auf, der gebildet wird durch zwei Seitenstege 11, 12, die parallel zueinander verlaufen und durch einen dazwischen angeordneten Zwischensteg 13, der die Seitenstege 11, 12 miteinander verbindet. Der Zwischensteg 13 verläuft senkrecht zu den Seitenstegen 11, 12. Im Bereich des in Richtung 8 liegenden Endes des Stößels 4 ist in dem Zwischensteg 13 eine Reibbelags-Ausnehmung 14 vorgesehen, die den Zwischensteg 13 vollständig durchdringt, also nach zwei Seiten - oben und unten - hin offen ist. Die Ausnehmung 14 wird umfangsseitig, d. h. in der durch den Zwischensteg 13 gebildeten Ebene, nach allen Seiten hin durch den Zwischensteg 13 begrenzt. Die Ausnehmung 14 weist eine rechteckige Form mit entlang der Richtung 8 liegenden parallelen Stirnseiten 15 und diese verbindenden, parallelen Längsseiten 16 auf. In der Ausnehmung 14 ist ein Reibbelag 17 angeordnet, dessen Form im einfachsten Fall im Wesentlichen der der Ausnehmung 14 entspricht. Der Reibbelag 17 ist somit quaderförmig, wobei seine Stirnseiten 18 an den Stirnseiten 15 der Ausnehmung 14 und seine Längsseiten 19 an den Längsseiten 16 der Ausnehmung 14 anliegen. Ansonsten weist der Reibbelag 17 zwei parallel zueinander verlaufende, die Ober- und Unterseite des Quaders bildende Reibflächen 20 auf. Der Reibbelag 17 besteht beispielsweise aus einem geeigneten Schaumstoff. Der Reibbelag 17, der selber einteilig ausgebildet ist, liegt unmittelbar an dem Rand der Ausnehmung 14 an des vorzugsweise einteilig ausgebildeten Stößels 4.

Das Gehäuse 2 umschließt einen Gehäuse-Innenraum 21, dessen Querschnittsform der Außenkontur des Stößels 4 entspricht, d. h. das Gehäuse 2 weist ebenfalls eine doppel-T-Querschnittsform auf. Im Gehäuse 2 sind zwei sich entlang der Mittel-Längs-Achse 3 erstreckende, zu den Seitenstegen 11, 12 korrespondierende Längskanäle 22 gebildet, die durch einen zum Zwischensteg 13 korrespondierenden Zwischenkanal 23 miteinander verbunden sind. Die Längskanäle 22 werden durch Längskanal-Wände 24 begrenzt. Der Zwischenkanal 23 wird durch zwei einander gegenüberliegende, parallel zueinander verlaufende Zwischenkanal-Wände 25 begrenzt. Auf den Zwischenkanal-Wänden 25 sind aus Blech bestehende, flächige Reib-Einsätze 26 befestigt. Diese sind im Bereich des Übergangs zu dem Befestigungs-Element 10 durch L-förmige Rücksprünge 27, die in entsprechenden Längsnuten in der Zwischenkanal-Wand 25 vorgesehen sind, fixiert. Die Reib-Einsätze 26 erstrecken sich über die volle Länge des Gehäuse-Innenraums 21 und liegen jeweils zwischen den Zwischenkanal-Wänden 25 und dem Zwischensteg 13 des Stößels 4. Das Gehäuse 2 ist vorteilhafterweise aus Kunststoff gefertigt. Die Reib-Einsätze 26 können beispielsweise aus Stahl-Blech bestehen.

Im Folgenden wird die Funktionsweise des Reibungsdämpfers beschrieben. Die gewünschte Reibungskraft kann beispielsweise durch die Wahl der Dicke D_{R} des Reibbelags 17 eingestellt werden. Insbesondere kann der Reibbelag 17 eine Dicke D_{R} besitzen, die größer als die Breite B_{z} des Zwischenkanals 23 ist. Der Reibbelag 17 liegt somit vorgespannt an den Reibflächen 28 der Reib-Einsätze 26 an. In Richtung 8 und senkrecht dazu in der durch den Zwischensteg 13 gebildeten Ebene wird der Reibbelag 17 durch die Stirnseiten 15 und Längsseiten 16 gehalten. Der eine Reibbelag 17 liegt direkt an den sich gegenüberliegenden Reibflächen 28 an. Es ist somit genau nur ein einziger Reibbelag 17 erforderlich, um an zwei gegenüberliegenden Reibflächen 28 reibend zu wirken. Durch die Form der Ausnehmung 14 und die Umfangsgestaltung des Reibbelags 17 kann die Dämpfungscharakteristik des Dämpfers 1 weitgehend frei eingestellt werden.

Wird der Stößel 4 entlang der Richtung 8 eingeschoben, so wird der Reibbelag 17 aufgrund der Haftreibungskräfte zwischen den Reibflächen 20 und den Reibflächen 28 zunächst teilweise gestaucht, wodurch ein geringfiigiger Freilaufeffekt erzielt wird. Anschließend erfolgt ein zunehmender Aufbau der Gleitreibungskraft. Dasselbe gilt für das anschließende Herausziehen entgegen der Richtung 8 des Stößels 4 aus dem Gehäuse 2. Ist die Länge L_{R} des Reibbelags 17 in axialer Richtung kleiner als die axiale Länge L_{A} der Ausnehmung 14, so kommt es beim Einschieben bzw. Herausziehen des Stößels 3 zu einer stärkeren Stauchung des Reibbelags 17. Es tritt somit ein ausgeprägterer Freilaufeffekt auf. Ist die Länge L_{R} des Reibbelages 17 größer als die Länge L_{A} der Ausnehmung 14, der Reibbelag 17 also in der Ausnehmung 14 axial vorgespannt, so tritt ein geringerer bzw. kein Freilaufeffekt auf. Der Reibkraftaufbau ist somit abrupter. An dem Aufbau vorteilhaft ist die beeinflussbare Charakteristik, d. h. beispielsweise Freilauf oder weicher Reibkraftaufbau. Entsprechende Charakteristiken wirken sich positiv auf die Laufeigenschaften der Waschmaschine aus. Beispielsweise werden die Bodenkräfte reduziert und die Akustik verbessert.

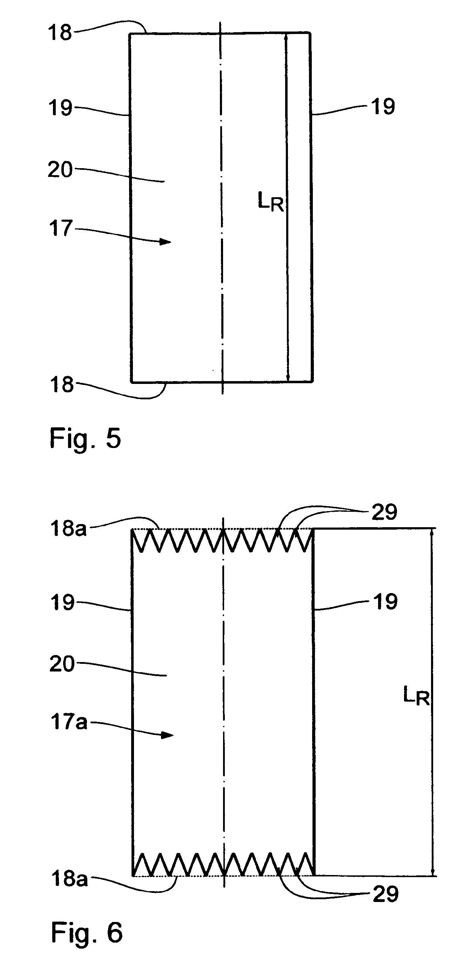

Im Folgenden wird unter Bezugnahme auf Fig. 6 ein zweites Ausführungsbeispiel der Erfindung beschrieben. Identische Teile erhalten dieselben Bezugszeichen wie beim ersten Ausfiihrungsbeispiel, auf dessen Beschreibung hiermit verwiesen wird. Konstruktiv unterschiedliche, jedoch funktionell gleichartige Teile erhalten dieselben Bezugszeichen mit einem nachgestellten a. Der wesentliche Unterschied gegenüber dem ersten Ausführungsbeispiel besteht in der Ausgestaltung des Reibbelages 17a. Der Reibbelag 17a weist grundsätzlich wieder eine quaderförmige Form mit Längsseiten 19 und Stirnseiten 18a auf. Die axialen Enden werden jedoch nicht durch eine planare Stirnseite, sondern durch eine gezackte Außenkontur mit zahlreichen Spitzen 29 gebildet. Der Reibbelag 17a weist somit im Querschnitt mäanderförmige Stirnseiten 18a auf. Es sind wieder drei Fälle zu unterscheiden. Ist L_{R} ungefähr gleich L_{A}, so entsteht ein stärkerer Freilaufeffekt, da die Spitzen 29 leichter gestaucht werden. Es erfolgt somit ein sehr weicher, progressiver Reibkraftaufbau. Ist L_{R} kleiner als L_{A}, so tritt ein noch ausgeprägterer Freilaufeffekt aufgrund des Verrutschens des Reibbelags 17a in der Ausnehmung 14 auf. Ist L_{R} größer als L_{A}, so wird der weiche Reibkraftaufbau durch die dann schon im Ausgangszustand komprimierten Spitzen 29 zunehmend beseitigt.

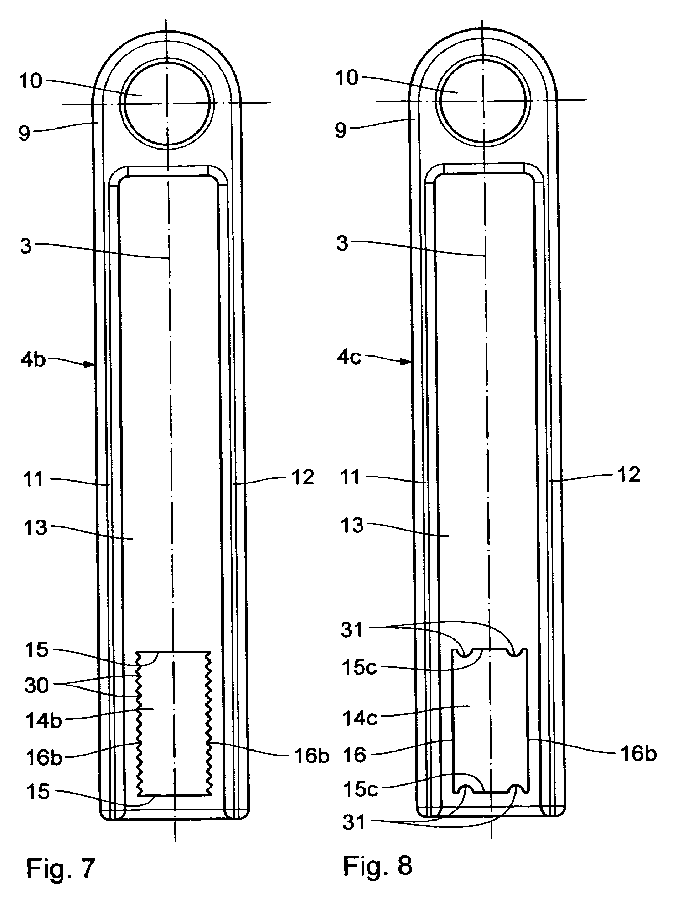

Im Folgenden wird unter Bezugnahme auf Fig. 7 ein drittes Ausfiihrungsbeispiel der Erfindung beschrieben. Identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten b. Der wesentliche Unterschied gegenüber dem ersten Ausfiihrungsbeispiel besteht darin, dass die Längsseiten 16b, die seitlich die Ausnehmung 14b begrenzen, nicht glatt, sondern gezackt bzw. mäanderförmig ausgebildet sind. Die Spitzen 30 der Längsseiten 16b drücken in den Reibbelag 17 von der Seite hinein, so dass dieser entlang der Richtung 8 besser fixiert wird. Aufgrund der axialen Fixierung tritt kein Freilaufeffekt ein. Der Reibkraftaufbau ist beim Beginn des Ein- bzw. Ausschieben des Stößels 4 weniger weich, sondern abrupter. Der Reibbelag 17 kann an seinen Längsseiten 19 zusätzlich eine Verzahnung besitzen, die zu der der Längsseite 16b passt.

Im Folgenden wird unter Bezugnahme auf Fig. 8 ein viertes Ausführungsbeispiel der Erfindung beschrieben. Identische Teile erhalten dieselben Bezugszeichen wie beim ersten Ausfiihrungsbeispiel, auf dessen Beschreibung hiermit verwiesen wird. Konstruktiv unterschiedliche, jedoch funktionell gleichartige Teile erhalten dieselben Bezugszeichen mit einem nachgestellten c. Der wesentliche Unterschied gegenüber dem ersten Ausfiihrungsbeispiel besteht darin, dass die Stirnseiten 15c nicht planar, sondern mit in die Ausnehmung 14c vorragenden Nasen 31, insbesondere zwei Nasen, versehen sind. Wenn der Reibbelag 17 eine Länge L_{R} besitzt, die dem Abstand der gegenüberliegenden Spitzen der Nasen 31 entspricht, so tritt ein leichter Freilaufeffekt aufgrund der Stauchung des Reibbelages 17 auf. Es erfolgt ein weicher progressiver Reibkraftaufbau. Erst tauchen die Nasen 31 in den Reibbelag 17 ein. Erst dann trifft die jeweilige Stirnseite 18 des Reibbelags 17 auf die Stirnseite 15c der Ausnehmung 14c. Ist der Reibbelag 17 kürzer als der Abstand der Spitzen der Nasen 31, so tritt ein ausgeprägterer Freilaufeffekt aufgrund des Verrutschens des Reibbelags 17 in der Ausnehmung 14c auf. Es erfolgt somit ein weicher progressiver Reibkraftaufbau.

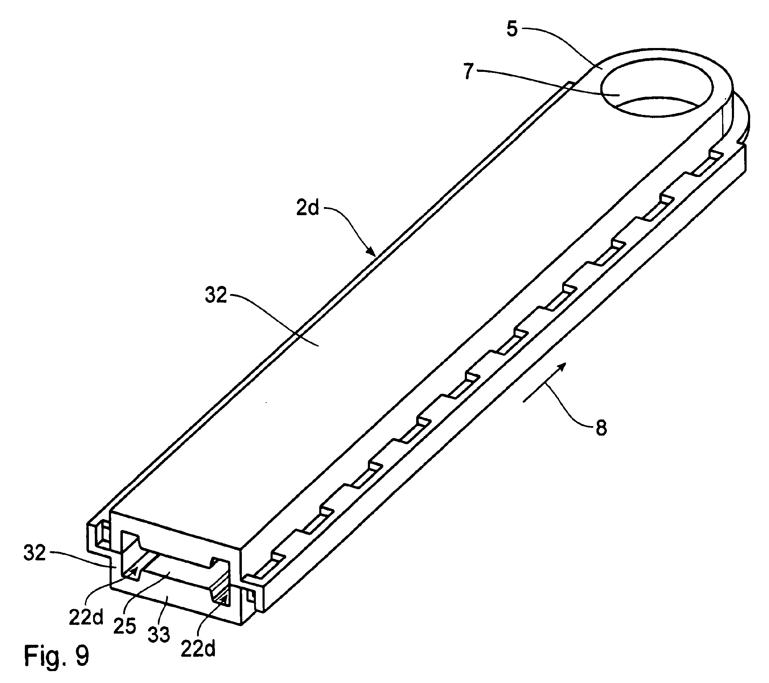

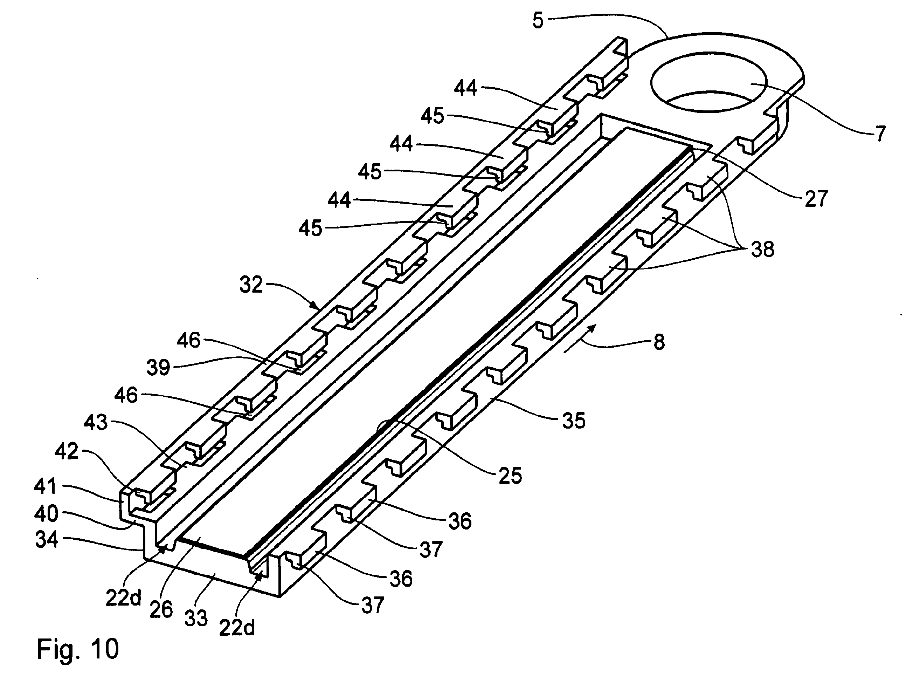

Im Folgenden wird unter Bezugnahme auf Fig. 9 und 10 ein fünftes Ausfiihrungsbeispiel der Erfindung beschrieben. Identische Teile erhalten dieselben Bezugszeichen wie beim ersten Ausfiihrungsbeispiel, auf dessen Beschreibung hiermit verwiesen wird. Konstruktiv unterschiedliche, jedoch funktionell gleichartige Teile erhalten dieselben Bezugszeichen mit einem nachgestellten d. Der wesentliche Unterschied gegenüber dem ersten Ausfiihrungsbeispiel besteht darin, dass das Gehäuse 2d nicht einteilig ausgebildet ist, sondern aus zwei vorzugsweise identischen Gehäuse-Teilen 32 besteht, die beispielsweise miteinander verrastet sind. Bei dem Verbindungsmechanismus zur Verbindung der beiden Gehäuse-Teile 32 handelt es sich um ein Linearbajonett, welches sich im letzten Stück der Verriegelungs-Bewegung verspannt. Prinzipiell ist auch eine Verrastung der beiden Teile 32 möglich. Das Gehäuse-Teil 32 weist eine Grundplatte 33 auf, an deren axialem Ende 5 ein Befestigungs-Element 7 vorgesehen ist. Auf der Innenseite der Grundplatte 33 ist jeweils eine Hälfte der Längskanäle 22 in Form von Längsnuten gebildet. Zwischen diesen liegt die nach oben vorspringende Zwischenkanal-Wand 25, auf der der aus Blech bestehende Reibeinsatz 26 angeordnet ist. Die Grundplatte 33 weist zwei sich axial erstreckende, äußere Längsflanken 34, 35 auf. Entlang der Flanke 35 sind seitlich, d. h. nach außen vorstehende Zähne 36 mit nach unten vorstehenden Nasen 37 nach Art einer Zahnleiste vorgesehen. Die Oberseite der Zähne 36 definiert eine planare erste Gleitfläche 38.

Im Bereich der Längsflanke 34 ist eine im Querschnitt U-förmige sich axial erstreckende, zur Grundplatte 33 offene Schiene 39 gebildet, bestehend aus einer unteren Leiste 40, einer senkrecht dazu verlaufenden mittleren Leiste 41 sowie einer parallel zu unteren Leiste 40 angeordneten, mit der mittleren Leiste 41 verbundenen oberen Leiste 42. Die Oberseite der unteren Leiste 40 definiert eine zweite Gleitfläche 43, wobei die Gleitflächen 38 und 43 in derselben Ebene liegen. Die obere Leiste 42 wird durch eine Reihe von Zähnen 44 mit Nasen 45 gebildet, die den Zähnen 36 bzw. Nasen 37 entsprechen und auf derselben axialen Höhe liegen. In der unteren Leiste 40 sind im Bereich der Zähne 44 Ausnehmungen 46 vorgesehen, um eine Entformung bei der Spritzgussherstellung des Gehäuse-Teils 32 zu vereinfachen. Zur Montage werden zwei Gehäuse-Teile 32 um eine Zahnposition versetzt aufeinandergelegt und dann um eine Zahnposition axial verschoben, so dass die beiden Gehäuse-Teile 32 zur Deckung gebracht und miteinander verrastet werden. Hierzu sind an den Nasen 37 nicht dargestellte Rastvorsprünge vorgesehen, die ein Auseinanderrutschen der Gehäuse-Teile 32 verhindern. Vorteilhaft an der Ausgestaltung der Gehäuse-Teile 32 ist, dass diese einfach herstellbar sind. Es ist auch möglich, auf eine integrierte axiale Sicherung, die eine Verrastung bewerkstelligt, zu verzichten und die axiale Sicherung der beiden Gehäuse-Teile 32 durch Fügen eines Gummilagers und einer Distanzbuchse im Auge zu bewerkstelligen.

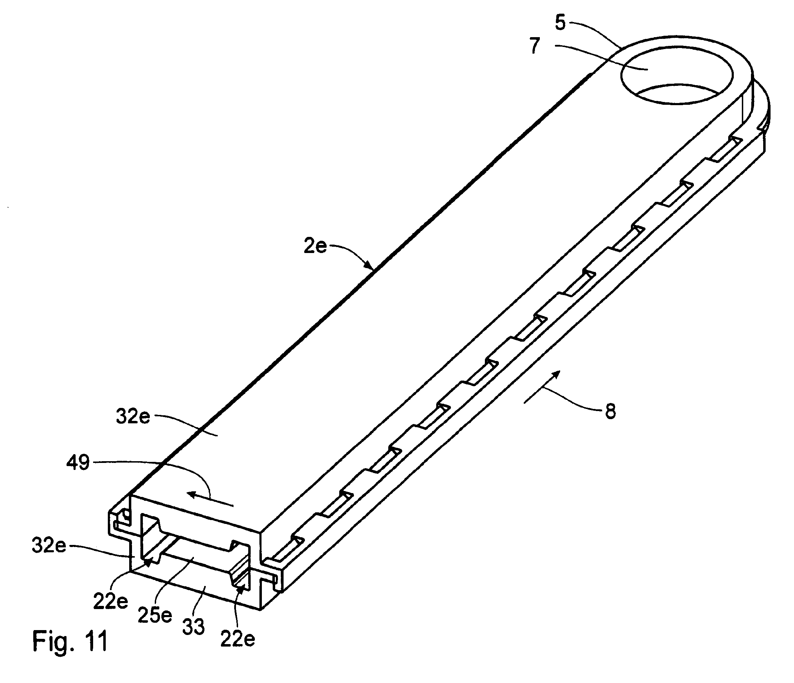

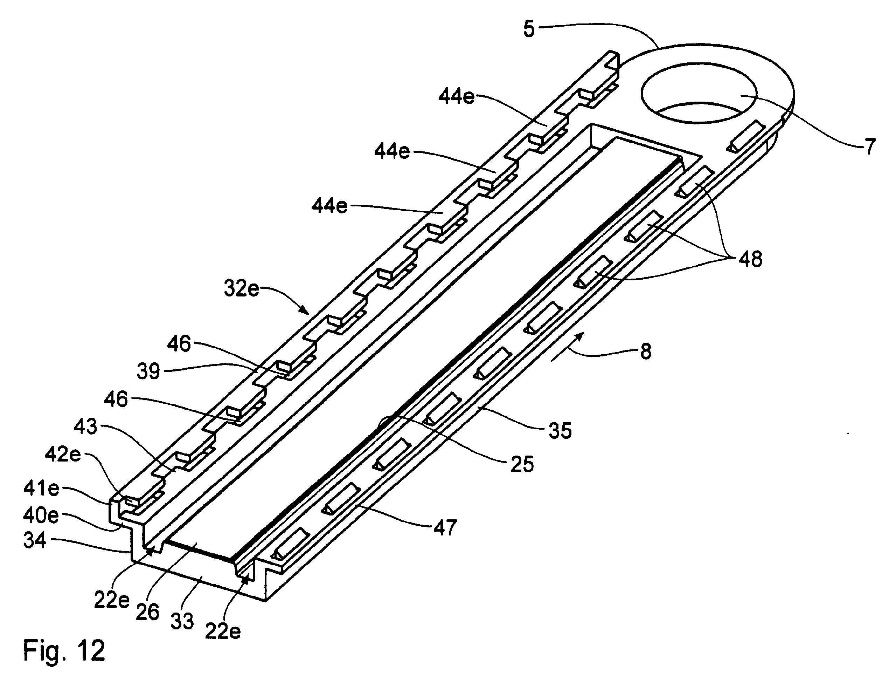

Im Folgenden wird unter Bezugnahme auf Fig. 11 und 12 ein sechstes Ausführungsbeispiel der Erfindung beschrieben. Identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten e. Der wesentliche Unterschied gegenüber dem fünften Ausführungsbeispiel gemäß den Fig. 9 und 10 besteht in der Ausgestaltung der Rastelemente und der Verrastungsbewegung. Auf der in Fig. 12 rechten Seite der Grundplatte 33 ist eine durchgehende Leiste 47 mit nach oben vorstehenden Rastnasen 48 vorgesehen, wobei die Rastnasen 48 seitlich nach außen quer zur Mittel-Längs-Achse 3 im Profil abfallen. Auf der gegenüberliegenden Seite der Grundplatte 33 ist wie beim fünften Ausführungsbeispiel eine im Querschnitt U-förmige Schiene mit Leisten 40e, 41e, 42e gebildet. Die Leiste 42e ist durch Rastzähne 44e gebildet, die oberhalb von Ausnehmungen 46e angeordnet sind. Bei einer Montage werden zwei Gehäuse-Teile 32e in derselben axialen Höhe aufeinander gesetzt und senkrecht zur Richtung 8 entlang einer Rast-Richtung 49 miteinander verrastet. Hierbei greifen die Rastnasen 48 des oberen Gehäuse-Teils 32e in die Ausnehmungen 46e des unteren Gehäuse-Teils 32e. Dasselbe gilt für die korrespondierende, gegenüberliegende Reihe von Rastnasen 48.

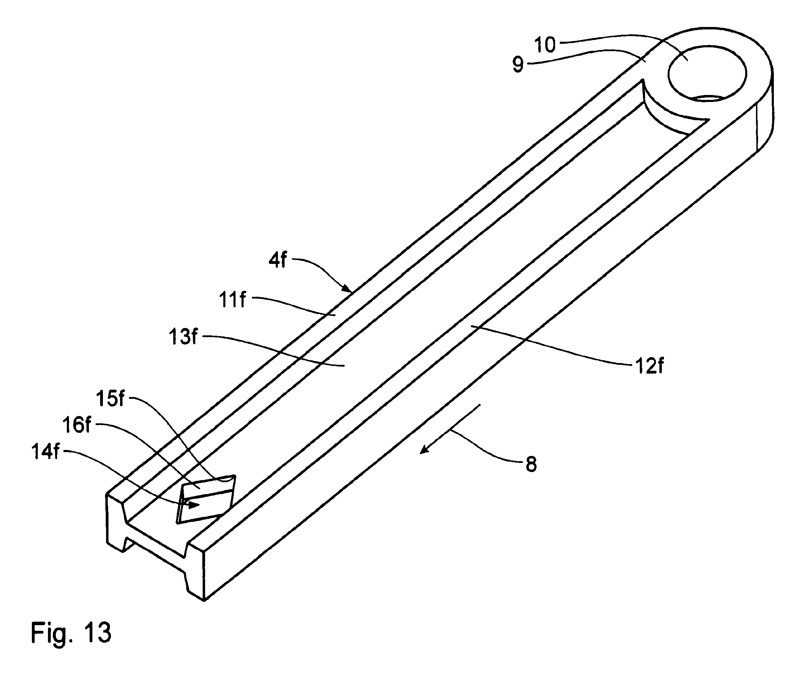

Im Folgenden wird unter Bezugnahme auf Figur 13 ein siebtes Ausführungsbeispiel der Erfindung beschrieben. Identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten f. Der wesentliche Unterschied gegenüber dem ersten Ausführungsbeispiel besteht in der Ausgestaltung der Reibbelags-Ausnehmung 14f. Diese ist rautenförmig, d. h. jeweils zwei gegenüberliegende Seiten sind parallel zueinander, stehen nicht senkrecht aufeinander und alle Seiten sind gleich lang. Zwei gegenüberliegende Spitzen weisen entlang der Einschub-Richtung 8. In der rautenförmigen Reibbelags-Ausnehmung 14f ist ein nicht dargestellter, zur Ausnehmung 14f passender, rautenförmiger Reibbelag angeordnet. Der Vorteil an der rautenförmigen Ausgestaltung besteht in der Reduzierung der Haftreibungsspitzen beim Beginn eines Reibvorgangs. Entlang der Richtung 8 ist der Reibbeleg spitz zulaufend ausgebildet, sodass die an den Spitzen angreifenden Haftreibungskräfte am Anfang einer Bewegung geringer sind. Durch die rautenförmige Ausgestaltung der Ausnehmung und des Reibbelags entsteht eine verbesserte Laufeigenschaft des Dämpfers. Ansonsten weist der Stößel im Bereich der Seitenstege 11f und 12f sowie des Zwischenstegs 13 feine Trogform auf, die anhand des nächsten Ausführungsbeispiels näher erläutert wird, worauf hiermit verwiesen wird.

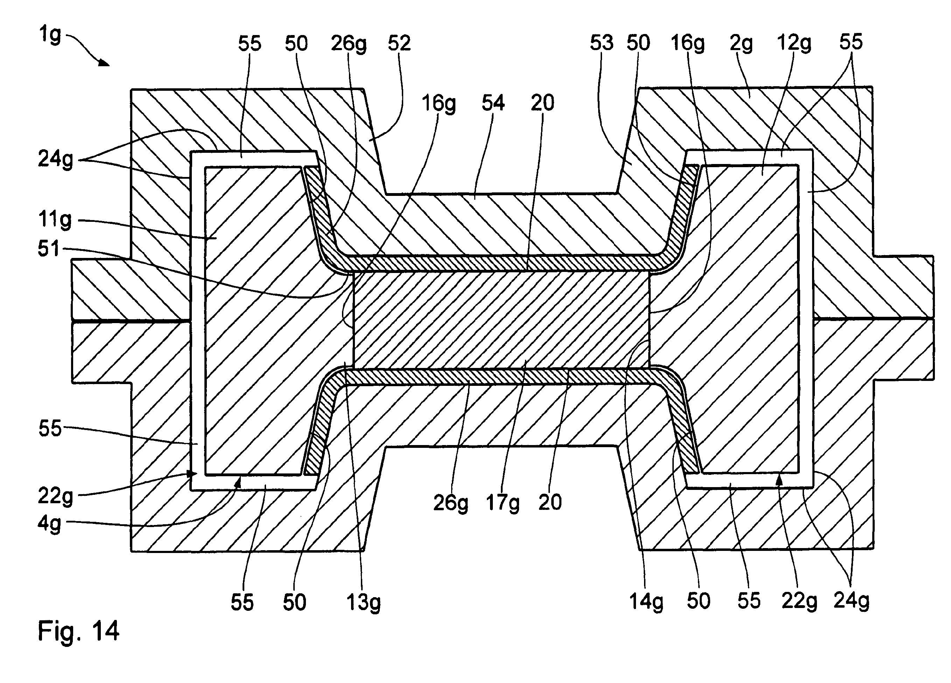

Im Folgenden wird unter Bezugnahme auf Figur 14 ein achtes Ausführungsbeispiel der Erfindung beschrieben. Identische Teile erhalten dieselben Bezugszeichen, wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einen nachgestellten g. Der wesentliche Unterschied gegenüber dem ersten Ausführungsbeispiel besteht in der Ausgestaltung der durch die Seitenstege 11g und 12g sowie durch den Zwischensteg 13g gebildeten Vertiefung auf der Oberseite und Unterseite des Stößels 4g. Beim ersten Ausführungsbeispiel weist der Stößel auf der Oberseite und der Unterseite jeweils einen U-förmigen, d. h. insgesamt einen H-förmigen Querschnitt auf, d. h. die Außenwände der Seitenstege stehen senkrecht auf dem Zwischensteg. Bei dem vorliegenden Ausfiihrungsbeispiel ist dies anders. Dort weisen die Oberseite und die Unterseite des Stößels 4g eine trogförmige Vertiefung auf. Dies bedeutet, dass die Innenflächen 50 der Seitenstege 11g und 12g mit der durch die Außenseite des Zwischenstegs 13g gebildeten Bodenfläche 51 einen Winkel von mehr als 90 ° einschließen, d. h. die Innenflächen 50 verlaufen schräg nach außen. Das Gehäuse 2g weist eine entsprechende trogförmige Einschnürung auf, die durch Seitenstege 52 und 53, die parallel zu den Innenflächen 50 verlaufen, und einen Zwischensteg 54 gebildet wird, der parallel zum Zwischensteg 13g verläuft. Auf der Innenseite der Stege 52, 53 und 54 ist ein entsprechend geformter Reib-Einsatz 26g vorgesehen, der an der Innenseite der Stege 52, 53 und 54 anliegt und dort befestigt ist. Zwischen den Schenkeln des Reib-Einsatzes 26g und den Innenflächen 50 besteht nur ein geringes Spiel. Ansonsten besteht zwischen den Seitenstegen 11g und 12g und der Innenseite des Gehäuses 2g ein größeres Spiel 55, sodass es bei einer Schräglage des Stößels 4g im Gehäuse 2g im Bereich des Spiels 55 zu keinem Kontakt zwischen Stößel 4g und Innenseite 2g kommt. Die doppel-trogförmige Ausgestaltung des Stößels 4g und des Reib-Einsatzes 26g bewirkt, dass der Stößel 4g in der in Figur 14 dargestellten Schnittebene in zwei Dimensionen automatisch zentriert wird und immer wieder in die Mittellage zurückgeführt wird. Darüber hinaus wird ein hartes Anschlagen zwischen Stößel 4g und dem Gehäuse 2g vermieden.

## Patentansprüche

1. Dämpfer, insbesondere für Waschmaschinen mit Schleudergang, mit
a) einem eine Mittel-Längs-Achse (3) aufweisenden, einen Gehäuse-Innenraum (21) zumindest teilweise durch Gehäuse-Wände (24, 25) umschließenden Gehäuse (2; 2d; 2e; 2g),
b) einem in dem Gehäuse (2; 2d; 2e; 2g) entlang der Mittel-Längs-Achse (3) verschiebbaren, aus dem Gehäuse (2; 2d; 2e; 2g) herausgeführten, mindestens eine Reibbelags-Ausnehmung (14; 14b; 14c; 14f; 14g) aufweisenden Stößel (4; 4b; 4c; 4f; 4g),
i. wobei die Reibbelags-Ausnehmung (14; 14b; 14c; 14f; 14g) den Stößel (4; 4b; 4c; 4f; 4g) vollständig durchdringt,
c) an freien Enden (5, 9) des Gehäuses (2; 2d; 2e; 2g) und des Stößels (4; 4b; 4c; 4f; 4g) angeordneten Befestigungs-Elementen (7, 10), und
d) mindestens einem, in der mindestens einen Reibbelags-Ausnehmung (14; 14b; 14c; 14f; 14g) angeordneten, einteilig ausgebildeten, an gegenüberliegenden Gehäuse-Wänden (25) reibend anliegenden Reibbelag (17; 17a; 17g).

2. Dämpfer gemäß Anspruch 1, **dadurch gekennzeichnet, dass** das Gehäuse (2; 2d; 2e) und/oder der Stößel (4; 4b; 4c) im Querschnitt doppel-T-förmig ausgebildet ist.

3. Dämpfer gemäß einem der vorangehenden Ansprüche, **dadurch gekennzeichnet, dass** die Reibbelags-Ausnehmung (14; 14f) eine rechteckige oder rautenförmige Form aufweist.

4. Dämpfer gemäß einem der vorangehenden Ansprüche, **dadurch gekennzeichnet, dass** die Form des Reibbelages (17; 17f; 17g) der Form der Reibbelags-Ausnehmung (14; 14f; 14g) angepasst ist.

5. Dämpfer gemäß Anspruch 4, **dadurch gekennzeichnet, dass** der Reibbelag (17a) an mindestens einer Stirnseite (18a) gezackt ausgebildet ist.

6. Dämpfer gemäß einem der vorangehenden Ansprüche, **dadurch gekennzeichnet, dass** die Reibbelags-Ausnehmung (14b; 14c) begrenzt wird durch an den axialen Enden liegende Stirnseiten (15; 15c) und diese verbindende Längsseiten (16; 16b).

7. Dämpfer gemäß Anspruch 6, **dadurch gekennzeichnet, dass** mindestens eine Längsseite (16b) gezackt ausgebildet ist.

8. Dämpfer gemäß einem der vorangehenden Ansprüche, **dadurch gekennzeichnet, dass** das Gehäuse (2) mindestens einen ersten Gehäuse-Teil (32; 32e) und einen zweiten Gehäuse-Teil (32; 32e) aufweist, und die Gehäuse-Teile (32; 32e) durch eine Verrast-Bewegung in axialer Richtung oder quer zur axialen Richtung miteinander verbindbar, insbesondere verrastbar sind.

9. Dämpfer gemäß Anspruch 1, **dadurch gekennzeichnet, dass** auf der Innenseite des Gehäuses (2; 2d; 2e; 2g) mindestens ein Reib-Einsatz (26; 26g) angeordnet ist.

10. Dämpfer gemäß Anspruch 1, **dadurch gekennzeichnet, dass** das Gehäuse (2g) und der Stößel (4g) einen doppel-trogförmigen Querschnitt aufweisen.

11. Dämpfer gemäß Anspruch 1, **dadurch gekennzeichnet, dass** die Gehäuse-Wände (25) einen Zwischenkanal (23) mit einer Breite B_{Z} begrenzen, und der Reibbelag (17; 17a; 17g) eine Dicke D_{R} besitzt, die größer ist als die Breite B_{Z} des Zwischenkanals (23).

## Claims

1. Damper, in particular for washing machines with a spin cycle, with
a) a housing (2; 2d; 2e; 2g) having a central longitudinal axis (3), at least partially encompassing a housing interior (21) by housing walls (24, 25),
b) a plunger (4; 4b; 4c; 4f; 4g) displaceable in the housing (2; 2d; 2e; 2g) along the central longitudinal axis (3), guided out of the housing (2; 2d; 2e; 2g) and having at least one friction lining recess (14; 14b; 14c; 14f; 14g),
i) wherein the friction lining recess (14; 14b; 14c; 14f; 14g) fully penetrates the plunger (4; 4b; 4c; 4f; 4g),
c) fastening elements (7, 10), arranged on open ends (5, 9) of the housing (2; 2d; 2e; 2g) and the plunger (4; 4b; 4c; 4f; 4g), and
d) at least one friction lining (17; 17a; 17g), arranged in the at least one friction lining recess (14; 14b; 14c; 14f; 14g), constructed as one part and in frictional contact with opposite housing walls (25).

2. Damper according to claim 1, **characterised in that** the housing (2; 2d; 2e) and/or the plunger (4; 4b; 4c) is constructed as double T-shaped in cross-section.

3. Damper according to one of the preceding claims, **characterised in that** the friction lining recess (14; 14f) has a rectangular or diamond-shaped form.

4. Damper according to one of the preceding claims, **characterised in that** the shape of the friction lining (17; 17f; 17g) is matched to the shape of the friction lining recess (14; 14f; 14g).

5. Damper according to claim 4, **characterised in that** the friction lining (17a) is constructed as indented on at least one end face (18a).

6. Damper according to one of the preceding claims, **characterised in that** the friction lining recess (14b; 14c) is limited by end faces (15; 15c) located at the axial ends and longitudinal sides connecting them (16; 16b).

7. Damper according to claim 6, **characterised in that** the at least one longitudinal side (16b) is constructed as indented.

8. Damper according to one of the preceding claims, **characterised in that** the housing (2) has at least one first housing part (32; 32e) and one second housing part (32; 32e), and the housing parts (32; 32e) can be connected, in particular locked, to one another by a locking movement in the axial direction or transversely to the axial direction.

9. Damper according to claim 1, **characterised in that** at least one friction insert (26; 26g) is arranged on the inside of the housing (2; 2d; 2e; 2g).

10. Damper according to claim 1, **characterised in that** the housing (2g) and the plunger (4g) have a double-trough-shaped cross-section.

11. Damper according to claim 1, **characterized in that** the housing walls (25) define an intermediate channel (23) having a width B_{Z}, and the friction lining (17; 17a; 17g) has a thickness D_{R} which is greater than the width B_{Z} of the intermediate channel (23).

## Revendications

1. Amortisseur, en particulier pour lave-linges avec essorage, avec
a) un boîtier (2 ; 2d ; 2e ; 2g) présentant un axe médian longitudinal (3), entourant au moins partiellement un espace intérieur de boîtier (21) par des parois de boîtier (24, 25),
b) un coulisseau (4 ; 4b ; 4c ; 4f ; 4g) mobile dans le boîtier (2 ; 2d ; 2e ; 2g) le long de l'axe médian longitudinal (3), guidé hors du boîtier (2 ; 2d ; 2e ; 2g), présentant au moins un évidement de garniture de friction (14 ; 14b ; 14c ; 14f ; 14g),
i. l'évidement de garniture de friction (14 ; 14b ; 14c ; 14f ; 14g) traversant complètement le coulisseau (4 ; 4b ; 4c ; 4f ; 4g),
c) des éléments de fixation (7, 10) disposés sur des extrémités (5, 9) libres du boîtier (2 ; 2d ; 2e ; 2g) et du coulisseau (4 ; 4b ; 4c ; 4f ; 4g), et
d) au moins une garniture de friction (17 ; 17a ; 17g) disposée dans l'au moins un évidement de garniture de friction (14 ; 14b ; 14c ; 14f ; 14g), réalisée d'un seul tenant, reposant par friction sur des parois de boîtier (25) opposées.

2. Amortisseur selon la revendication 1, **caractérisé en ce que** le boîtier (2 ; 2d ; 2e) et/ou le coulisseau (4 ; 4b ; 4c) est réalisé en section en forme de double T.

3. Amortisseur selon l'une quelconque des revendications précédentes, **caractérisé en ce que** l'évidement de garniture de friction (14 ; 14f) présente une forme rectangulaire ou rhomboïdale.

4. Amortisseur selon l'une quelconque des revendications précédentes, **caractérisé en ce que** la forme de la garniture de friction (17 ; 17f ; 17g) est adaptée à la forme de l'évidement de garniture de frein (14 ; 14f ; 14g).

5. Amortisseur selon la revendication 4, **caractérisé en ce que** la garniture de friction (17a) est réalisée dentelée sur au moins un côté frontal (18a).

6. Amortisseur selon l'une quelconque des revendications précédentes, **caractérisé en ce que** l'évidement de garniture de friction (14b ; 14c) est délimité par des côtés frontaux (15 ; 15c) se trouvant sur les extrémités axiales et des côtés longitudinaux (16 ; 16b) les reliant.

7. Amortisseur selon la revendication 6, **caractérisé en ce qu'**au moins un côté longitudinal (16b) est réalisé dentelé.

8. Amortisseur selon l'une quelconque des revendications précédentes, **caractérisé en ce que** le boîtier (2) présente au moins une première partie de boîtier (32 ; 32e) et une seconde partie de boîtier (32 ; 32e), et les parties de boîtier (32 ; 32e) peuvent être reliées, en particulier encliquetées entre elles par un mouvement d'encliquetage dans le sens axial ou transversalement au sens axial.

9. Amortisseur selon la revendication 1, **caractérisé en ce qu'**au moins un insert de friction (26 ; 26g) est disposé sur le côté intérieur du boîtier (2 ; 2d ; 2e ; 2g).

10. Amortisseur selon la revendication 1, **caractérisé en ce que** le boîtier (2g) et le coulisseau (4g) présentent une section en forme de double bac.

11. Amortisseur selon la revendication 1, **caractérisé en ce que** les parois de boîtier (25) délimitent un canal intermédiaire (23) avec une largeur B_{Z}, et la garniture de friction (17 ; 17a ; 17g) possède une épaisseur D_{R} qui est supérieure à la largeur B_{Z} du canal intermédiaire (23).
